Europäisches Patentamt

European Patent Office

Office européen des brevets

(19)

(11) Publication number: **0 057 302**
**B1**

(12) **EUROPEAN PATENT SPECIFICATION**

(45) Date of publication of patent specification: **28.08.85**

(51) Int. Cl.⁴: **B 29 C 35/06, H 01 B 13/00**

(21) Application number: **81300386.0**

(22) Date of filing: **30.01.81**

(54) **A rubber and plastics covered cable cross-linking device.**

| | |
|---|---|
| (43) Date of publication of application: **11.08.82 Bulletin 82/32** | (73) Proprietor: **SUMITOMO ELECTRIC INDUSTRIES LIMITED** **No. 15, Kitahama 5-chome Higashi-ku Osaka-shi Osaka-fu (JP)** |
| (45) Publication of the grant of the patent: **28.08.85 Bulletin 85/35** | (72) Inventor: **Kanji, Otani c/o SUMITOMO ELECTRIC INDUSTRIES LTD.** **Yokohama Works No. 1, Taya-cho Totsuka-ku Yokohama-shi Kanagawa (JP)** |
| (84) Designated Contracting States: **CH DE FR GB IT LI SE** | |
| (56) References cited: **DE-A-2 739 777** **DE-A-2 826 857** **GB-A-1 161 034** **US-A-3 588 954** | (74) Representative: **Roberts, Peter William et al Marks & Clerk Alpha Tower Suffolk Street Queensway Birmingham B1 1TT (GB)** |

Courier Press, Leamington Spa, England.

EP 0 057 302 B1

## Description

This invention relates to a rubber and plastics covered cable cross-linking device.

Heretofore, a cross-linking device having a high pressure steam heating section and a high pressure liquid cooling section has been commonly employed to subject a rubber and plastics covered power cable to cross-linking. However, recently a so-called dry cross-linking device requiring no high pressure steam has been extensively employed in order to:

(1) increase the cable manufacturing speed, and

(2) prevent the formation of voids which were produced by high pressure steam thereby to improve the quality of the manufactured cable.

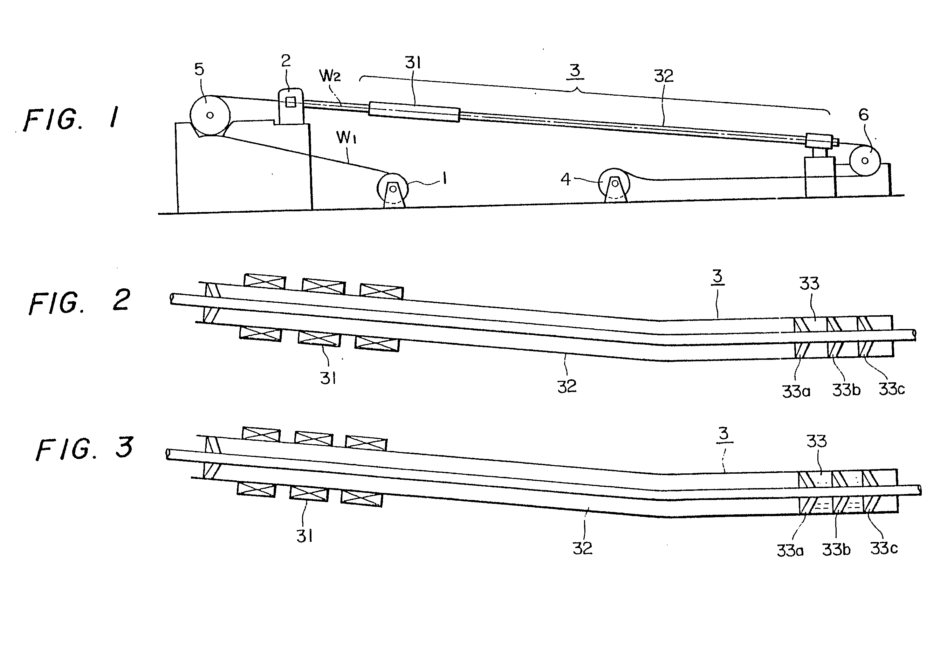

A radiation heating type cross-linking device has been extensively employed as a typical example of the dry cross-linking device. An example of such a prior art radiation heating type cross-linking apparatus is shown in Figure 1. In Figure 1, reference numeral 1 designates a conductor supplying device, 1 an extruding device for extruding a cross-linkable rubber/plastic insulator containing a cross-linking agent, 3 a cross-linking device, 31 a radiation heating section using heat rays, 32 a cooling section, 4 a winding device for winding completed cross-linked cable core, 5 and 6 guide rollers, $W_1$ a conductor, and $W_2$ a cable core. In the radiation heating section 31, a rubber and plastics covered power cable running through a cross-linking tube which is heated to 300 to 550°C by an electrical device or by a high temperature oil jacket is heated to 280 to 350°C by heat from the cross-linking tube so as to be cross-linked. The power cable thus heated is then cooled to 50 to 95°C by the cooling section 32.

In such a radiation heating type cross-linking device, no high pressure steam is employed in the heating section and therefore the cable is free from voids the formation of which is attributed to the steam and the treated cable is high in quality. One of the features of the radiation heating device is that the temperature of the heating section and the pressure of an inert gas coolant can be individually controlled. Because of this feature, it is possible to increase the temperature of the heating section to a high temperature, 300 to 550°C as described above, which improves the cross-linking rate and the manufacturing rate.

A gas cooling system has been proposed as the cooling system in the above-described radiation heating cross-linking device. Fig. 2 is a sectional view of an example of the radiation heating cross-linking device employing a gas cooling system.

As shown in Fig. 2, a cross-linking tube 3 includes a radiation heating section 31, a gas cooling section 32, and a sealing section 33. The sealing section 33 includes packings or gaskets 33a, 33b and 33c. An inert gas such as nitrogen at a pressure of 2 to 20 bar is circulated at a flow rate of 1 to 30 $Nm^3$/min in the radiation heating section 31 and the gas cooling section 32 to cool cross-linked rubber and plastic covered power cable to a predetermined temperature (50 to 95°C). The length of the cooling section should be determined from the desired cable manufacturing rate, the diameter of the cable to be cooled and the heating temperature employed. However, the provision of a lengthy cooling section is not economical and therefore the length of the cooling section is preferably selected to a certain value by taking various conditions into account. In the case where the gas cooling system is employed, if for instance the conductor feeding speed is increased, the cable is not sufficiently cooled to the predetermined temperature (50 to 95°C). That is, the cable passes through the sealing section with its surface cooled only to 70 to 110°C as a result of which the cable surface may be scratched or deformed.

US—A—3588954 discloses a cross-linking device having a vertically disposed cross-linking tube containing a relatively short gas cooling section which acts as a pre-cooling zone and a liquid cooling section which acts as a main cooling zone. There is a direct liquid/gas interface between the two zones and gaskets are provided at a lower downstream end portion of the tube to seal the lower end of the tube.

An object of the invention is to provide a cross-linking device in which the above-described difficulties accompanying conventional cross-linking devices according to Figs. 1 and 2 have been eliminated or reduced.

Accordingly, the invention resides in a rubber and plastics covered cable cross-linking device having a cross-linking tube comprising a radiation heating section, a gas cooling section and a sealing section which includes gaskets and a liquid cooling section at a downstream end portion of the tube, characterized in that said sealing section is disposed at said downstream end portion of the tube so as to provide a gas cooling section in the tube extending over the majority of the length of the latter and in that a gasket separates said liquid cooling section from said gas cooling section.

In the accompanying drawings,

Figure 1 is an explanatory diagram showing an example of a prior art radiation heating type cross-linking device;

Figure 2 is a sectional view of a cross-linking tube of a cross-linking device of the type shown in Figure 1 using a gas cooling system; and

Figure 3 is a sectional view of a cross-linking tube of a cross-linking device according to one example of the invention.

Referring to Figure 3, those components which have been previously described with reference to Figure 2 are similarly numbered in Figure 3. In the cross-linking device of said one example of the invention, a liquid is sealed or circulated under pressure in a sealing section 33 which includes packings 33a, 33b and 33c and which is disposed at the downstream end of the tube 3. The liquid in the sealing section 33 not only facilitates the cooling of the surface layer of a cable running through the cross-linking tube 3 but also serves as a lubricant to decrease the friction between the cable surface and the packings. Examples of suitable liquids are water, silicon oil and special molten metal salt solution. The liquid is sealed or circulated in the sealing section 33 under a pressure greater than atmospheric pressure and equal to or lower than the gas pressure in the gas cooling section 32.

In the cross-linking device of said one example, the gas and the liquid used in combination provide a high cooling efficiency. Therefore, the device has an advantageous cooling effect. As the liquid is sealed or circulated in the sealing section 33, the liquid serves as a lubricant between the packings and the cable surface layer to protect the cable surface from being scratched.

## Claims

1. A rubber and plastics covered cable cross-linking device having a cross-linking tube (3) comprising a radiation heating section (31), a gas cooling section (32), and a sealing section (33), which includes gaskets (33a, 33b, 33c) and a liquid cooling section, at a downstream end portion of the tube (3), characterized in that said sealing section (33) is disposed at said downstream end portion of the tube so as to provide a gas cooling section (32) in the tube (3) extending over the majority of the length of the latter and in that a gasket (33a) separates said liquid cooling section (33) from said gas cooling section (32).

2. A device as claimed in Claim 1, characterized in that the liquid pressure in the liquid cooling section (33) is higher than atmospheric pressure and no greater than the gas pressure in the gas cooling section (32).

3. A device as claimed in Claim 1 or 2, characterized in that said liquid in the liquid cooling section (33) is selected from water, silicone oil, and a molten metal salt solution.

## Revendications

1. Dispositif de réticulation pour câbles gainés de caoutchouc et de matière plastique, comprenant un tube de réticulation (3) comprend une section de chauffage par rayonnement (31), une section de refroidissement par le gaz (32) et une section de fermeture étanche (33), qui comprend des joints (33a, 33b, 33c) et une section de refroidissement par liquide, à une partie terminale aval du tube (3), caractérisé en ce que ladite section de fermeture étanche (33) est disposée à ladite partie terminale aval du tube de manière à former dans le tube (3) une section de refroidissement par gaz (32) qui s'étend sur la plus grande partie de la longueur de ce tube et en ce qu'un joint (33a) sépare ladite section de refroidissement par liquide (33) de ladite section de refroidissement par gaz (32).

2. Dispositif selon la revendication 1, caractérisé en ce que la pression du liquide dans la section de refroidissement par liquide (33) est supérieure à la pression atmosphérique et non supérieure à la pression du gaz dans la section de refroidissement par gaz (32).

3. Dispositif selon la revendication 1 ou 2, caractérisé en ce que ledit liquide contenu dans la section de refroidissement par liquide (33) est choisi parmi l'eau, une huile de silicone et une solution de sels métalliques fondus.

## Patentansprüche

1. Vorrichtung zum Vernetzen mit Gummi und Kunststoff überzogener Kabel mit einem Vernetzungsrohr (3), enthaltend einen Strahlungserwärmungsabschnitt (31), einen Gaskühlungsabschnitt (32), einen Dichtungsabschnitt (33), der Dichtungsscheiben (33a, 33b, 33c) und einen Flüssigkeitskühlungsabschnitt aufweist, an einem stromabwärtigen Endbereich des Rohres (3), dadurch gekennzeichnet, daß der Dichtungsabschnitt (33) an dem stromabwärtigen Endbereich des Rohres angeordnet ist, um einen Gaskühlungsabschnitt (32) in dem Rohr (3) auszubilden, der sich über den Großteil der Länge des letzteren erstreckt, und daß ein Dichtungsring (33a) den Flüssigkeitskühlungsabschnitt (33) von dem Gaskühlungsabschnitt (32) trennt.

2. Vorrichtung nach Anspruch 1, dadurch gekennzeichnet, daß der Flüssigkeitsdruck in dem Flüssigkeitskühlungsabschnitt (33) höher als der atmosphärische Druck und nicht größer als der Gasdruck in dem Gaskühlungsabschnitt (32) ist.

3. Vorrichtung nach Anspruch 1 oder 2, dadurch gekennzeichnet, daß die Flüssigkeit in dem Flüssigkeitskühlungsabschnitt (33) aus Wasser, Siliconöl und einer geschmolzenen Metallsalzlösung ausgewählt ist.

FIG. 1

5  2  W₂  31  3  32  6

W₁  1  4

FIG. 2

3  33

31  32  33a  33b  33c

FIG. 3

3  33

31  32  33a  33b  33c

0 057 302